# EUROPEAN PATENT SPECIFICATION

(11) **EP 1 572 493 B1**
(45) Date of publication and mention of the grant of the patent: **16.07.2008**
(21) Application number: 03798933.2
(22) Date of filing: 29.09.2003
(51) Int. Cl.: B60N 2/42, B60N 2/427

(54) **VEHICLE SEAT WITH A PELVIS ENERGY MANAGEMENT DEVICE**
FAHRZEUGSITZ MIT BECKENENERGIEVERTEILVORRICHTUNG
SIEGE DE VEHICULE MUNI D'UN DISPOSITIF PERMETTANT DE GERER L'ENERGIE DU BASSIN

(30) Priority: 01.10.2002 GB 0222720
(43) Date of publication of application: 14.09.2005
(73) Proprietor: Dalphimetal Ltd., Coventry CV6 5NH (GB)
(72) Inventor: CUNDILL, David, James, Knighton, Leicestershire LE2 3WB (GB)
(74) Representative: Elzaburu Marquez, Alberto
(86) International application number: PCT/EP2003/012230
(87) International publication number: WO 2004/030980

(56) References cited:
- EP-A- 1 369 315
- WO-A-00/50270
- WO-A-01/45978
- WO-A-97/29924
- WO-A-98/41426
- DE-A- 4 230 670
- GB-A- 2 332 884
- US-A- 4 623 192
- PATENT ABSTRACTS OF JAPAN vol. 2000, no. 26, 1 July 2002 (2002-07-01) -& JP 2001 239872 A (TAKATA CORP), 4 September 2001 (2001-09-04)

## Description

### FIELD OF THE INVENTION

The present invention generally relates to a safety device for motor vehicle seats. More specifically, the present invention refers to a safety device with pelvis energy management and anti-submarining effects for motor vehicle seats (see, for example, JP-A-2001 239872, corresponding to the preamble of claim 1).

### BACKGROUND

Safety belts are well known restraining means for motor vehicle occupants. However, in restraining an occupant in a frontal collision, their interaction with the occupant can induce injuries to the front of the pelvis bone structure, lumbar spine injuries and abdominal injuries caused when the occupant pelvis slides underneath the lap portion of the seat belt during a collision, an event known as submarining. Additionally, seat belts still allow, in many cases, for excessive interaction between the occupants legs, and the instrument panel, with associated injuries to knees and legs, in such collisions.

Load limiting elements and devices such as load limiting mechanisms and pretensioners are well known enhancements to seat belts. Seat belts designed with pretensioners can reduce the amount of interaction between the occupants legs and instrument panel, but do so by increasing the loading on the front of the pelvis bone. Load limiting devices reduce the loading caused by the seatbelt and allow the benefits of early restraint from the belt in a collision when pretensioners are used. Such devices however, allow for a greater risk of submarining. State of the art in motor vehicle seats for protecting the occupant against submarining of the pelvis, and its associated abdominal injuries, comprise of various anti-submarining pans, bars or a combination of these. Such devices are passive structures located underneath the seat foam at the base of the seat. In the event of a collision the inertia of the occupants legs are restrained by these devices, once the seat foam above them has been crushed by the moving occupant. As such, these devices cannot restrain the occupant until he/she has moved in relation to the seat belt and seat and are of no benefit to the occupant until the occupant has done so. Placing the device closer to the occupant will enhance its performance, but produces comfort problems.

There are also known inflatable devices placed under the seats for lifting its front part in case of collision.

WO 97/29924 discloses a device which raises the front portion of the seat in a collision by active means in order to reduce injuries to lower limbs.

WO 98/41426 discloses a vehicle safety seat comprising a squab having airtight cells in the front portion filled wit resilient foam and means to inflate the cell in response to an accident situation.

GB 2 332 884 A discloses a vehicle safety seat including an inflatable device in the forward part of the squab, mounted under the foam or other padding of the squab, intended to automatically inflate in the event of an accident, raising the knees and restraining the pelvis of the occupant.

WO 01/45978 discloses a vehicle seat in which a transverse beam disposed at the front of the squab is provided with a chamber constituted, at least partially, by a plastically deformable metal sheet. Said chamber is associated with a gas generator adapted to inflate the chamber with an associated plastic deformation of the sheet. The chamber may have vent holes covered by a rupturable foil, and at least a part of the chamber may be corrugated to increase its volume and reinforced in the region impacted by the occupants pelvis. The inflated chamber is intended to minimise the risk of an occupant of the seat submarining beneath a safety-belt.

All of these devices address one or more, but not all of the above mentioned causes of injury to legs, front of pelvis bone, lumbar spine injuries and abdominal injuries. The introduction of such devices often improves the level of protection (i.e. reduces the injury) for a particular part of the occupant, but in doing so either increases the forces that other parts of the occupant are subjected to, or provide no improvement in protection to these other areas.

The present invention is intended to overcome the drawbacks of the above-mentioned devices by concentrating on managing the energy the entire pelvis of the occupant has in a collision and managing the absorption of said energy in a controlled manner.

### SUMMARY OF THE INVENTION

The present invention provides a vehicle seat with means to protect his/her occupant in a collision, preventing or reducing the risk of the occupant's pelvis sliding forward excessively with resulting harmful effects due to leg interaction with the instrument panel and the risk of sliding of the occupants pelvis underneath the lap portion of a seat belt during the collision. Said means are also intended to restrain movement of the pelvis in conjunction with a seat belt to a greater degree than the seat belt and any passive anti-submarining structure in the seat will achieve together.

According to the invention, which is defined in claim 1, there is provided a vehicle seat with a pelvis energy management device which is activated in the event of a collision and is propelled towards the occupant's upper legs and pelvis, crushing the seat foam between it and the occupant. This allows a restraining force to be applied to the occupant, before significant movement of the occupant (relative to the seat) has occurred.

The pelvis energy management device partly comprises of and is displaced by a volumetric chamber, which is positioned between two rigid or semi-rigid structures, the upper of which acts as the occupant restraining means.

Said upper structure is a deformable, energy absorbing structure, which may be (but is not limited to being) in the form of a pan, plate, can or honeycomb like structure. It may or may not be attached rigidly to the volumetric chamber below.

The lower structure acts as a reaction surface for the device and may be some form of rigid seat structure, which is underneath the volumetric chamber.

The volumetric chamber is filled with gas from a gas generator like an conventional airbag, and being sandwiched between the lower and upper structures, displacing the upper structure upwards towards the occupant. The occupant interacts with the deployed device deforming it, thus absorbing energy.

The volumetric chamber may vent allowing the upper structure and/or volumetric chamber to be deformed by the occupant for the remainder of the collision. The direction of the restraining forces produced by the device are controlled by the geometry of the deployed upper structure and/or volumetric chamber, and/or mechanical stops or locking means.

The volumetric chamber may be rigidly attached to the deformable upper structure directly or indirectly or may be independent of it.

The volumetric chamber may be inflated by means of a gas generator which may be in the form of a motor vehicle airbag gas generator. The volumetric chamber may be constructed from membrane materials such as thermoplastics or metal. The chamber may be constructed by various means which may include: welding, glues, etc. The chamber may be formed by molding means, i.e. blow molding, injection molding. The chamber is designed to inflate with an internal pressure in excess of 200 millibars to provide a rigid or semi rigid platform for the deformable upper structure. This requires materials and constructions for the chamber that are far stronger than those disclosed in the above mentioned prior art and beyond those used in current motor vehicle airbag module assemblies. The chamber may be designed with means of venting the gas, either through its parent material and or other means including the following: the joints between the material parts of the chamber, one or more venting holes, pressure sensitive burst discs, vents or membranes. The chambers venting mechanism if fitted, may be designed to burst at a pre-determined pressure level, or may be initiated by a second active device.

The deformable upper structure above the volumetric chamber absorbs energy from the interacting occupant by being able to be deformed. The deformable upper structure may or may not act as an anti submarining device in it's undeployed state. When the device is deployed, it extends rearwards, and to a lesser extent upwards within the seat, moving and compressing the seat foam above it and between it and the occupant. In its deployed position, the upper structure is forced against the base of the occupants pelvis via the seat foam that is sandwiched between the two, to provide early interaction between the device and the occupant in the collision event. As the occupant moves forward under the inertia created by the collision, the deformable upper structure is crushed progressively to absorb energy from the occupant, and to reduce forward movement of the pelvis in relation to the lap portion of the seat belt.

The deformable upper structure may be of sheet or tube construction, but may also be molded. The upper structure may be made from various materials including any or a combination of: metal, plastic, composite (i.e. carbon fibre). The deformable upper structure is designed to have a pre-determined stiffness, so as to deform in a predictable and/or controllable manner.

The deformable upper structure may be constructed to have form (i.e. depressions and/or swages), which may aid the control of its deformation and/or its geometry before and/or during the collision.

The geometry of the deformable upper structure may include a feature to imitate the shape of the upper legs and/or pelvis of the occupant to couple the occupant to it as it deforms. Various means may be employed to lock the deployed structure into place, allowing it to remain in its deployed state, whilst being deformed by the occupant.

### BRIEF DESCRIPTION OF DRAWINGS

The features, objects and advantages of the invention will become apparent by reading this description in conjunction with the accompanying drawings, in which:
Figures 1a and 1b are schematic cross-sectional views of a vehicle seat with a pelvis energy management device according to the present invention in un-deployed and deployed state, respectively.
Figure 2 shows a first embodiment of the invention as an exploded view.
Figure 3 shows a top view of the first embodiment of the invention.
Figures 4a, 4b, 4c and 4d shows the activation of the first embodiment of the invention and its operation through the collision.
Figure 5 shows a second embodiment of the invention as an exploded view.
Figure 6 shows a perspective view of the second embodiment of the invention.
Figure 7 shows a third embodiment of the invention as an exploded view.
Figure 8 shows a perspective view of the third embodiment of the invention.

### DETAILED DESCRIPTION OF THE INVENTION

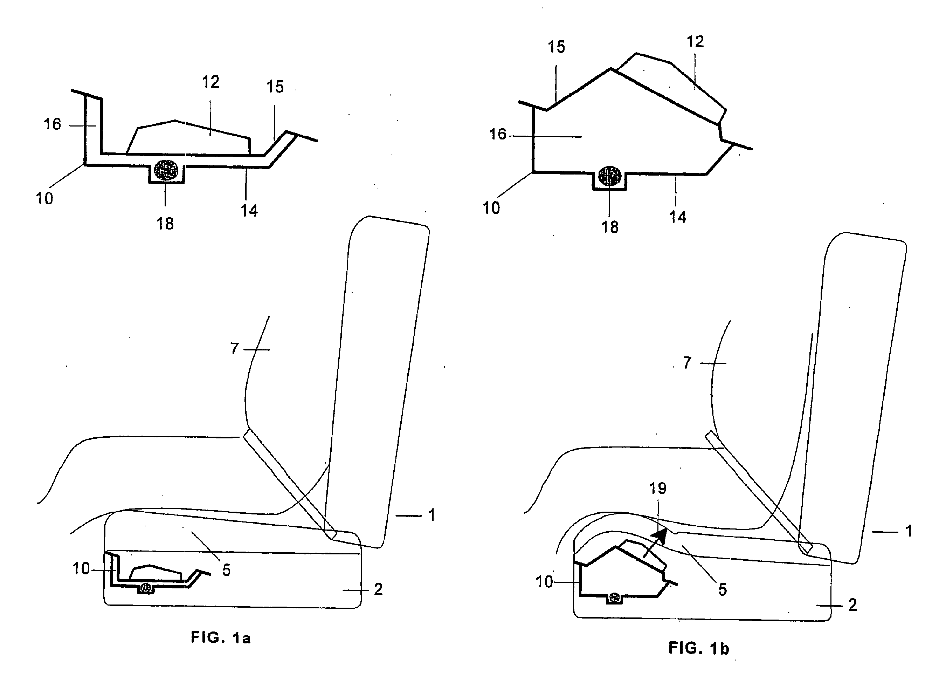

Following Figures 1a and 1b it can be seen that the pelvis energy management device 10 is located inside the squab 2 of the seat 1 in a similar position to a passive anti-submarining device.

The device 10 comprise an upper deformable structure 12 and an inflatable volumetric chamber 16 formed by an upper plate 15, a lower plate 14 and inflation means 18. It is secured to the frame structure of the seat by convenient means (not shown).

In the event of a collision, the device 10 is activated and is propelled towards the occupant 7, crushing the seat foam 5 between it and the occupant 7 as shown in Fig. 1b. This allows a restraining force 19 to be applied to the occupant 7, before significant movement of the occupant 7, relative to the seat 1 has occurred.

The upper deformable structure 12 is attached to the volumetric chamber 16 so that its filling with the gas provided by the inflator 18 moves the upper deformable structure 12 towards the occupant 7 and controls its position relative to the seat 1 throughout the collision.

The upper deformable structure 12 and, optionally, the volumetric chamber 16 are crushed so as to absorb energy and hence restrain the pelvis of the occupant 7.

The geometry and construction of the upper plate 15 of the volumetric chamber 16 may be such that its deployment allows the control of the direction of the displacement of the upper deformable structure 12.

The geometry and construction of the whole volumetric chamber 16 may be such that in its un-deployed state, the upper structure may be positioned partly or completely (as shown in Fig. 1a) within the extremities of the overall package space that the whole device takes up in the seat of the vehicle.

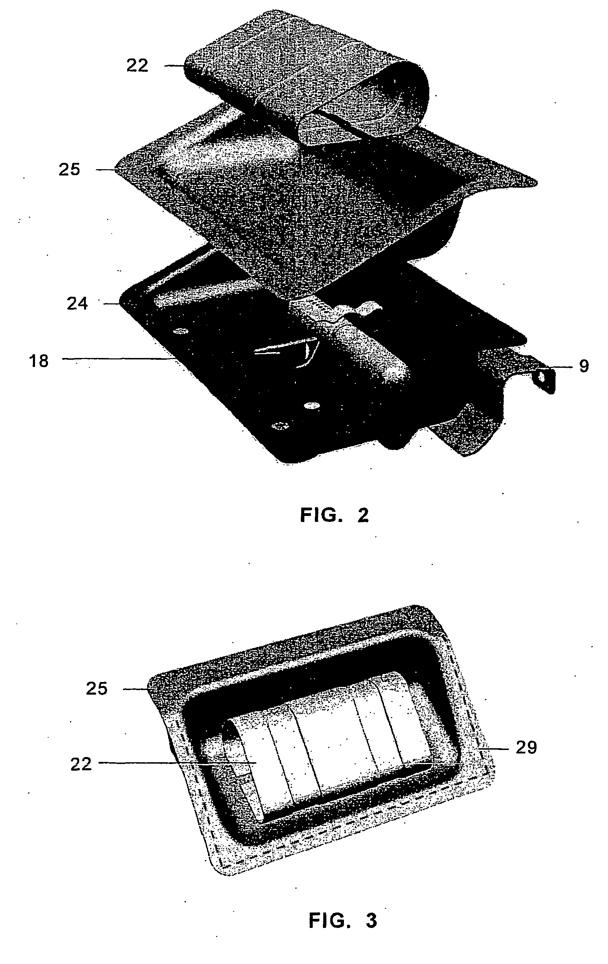

A first embodiment of the invention will now be described following Figures 2 and 3.

The deformable upper structure is in the form of a swaged crush can 22. This is attached to the upper plate 25 of the volumetric chamber which is in the form of a tray. The upper tray 25 of the volumetric chamber is attached around its periphery to a similar lower tray 24 forming an enclosed chamber. They can be secured all round by a seam weld 29, as shown in Fig. 3, forming a sealed chamber. The device is supported by the frame structure 9 of the seat.

With such an arrangement, the upper structure crush can 22 sits largely or completely within the exterior envelope 25 of the tray geometry of the volumetric chamber.

In the event of a collision, the device is actuated and gas from a gas generator 18 fills the space between upper tray 25 and lower tray 24. As the volume of gas that can be produced by the gas generator 18 is considerably larger than the volume inside the volumetric chamber between upper tray 25 and lower tray 24, the gas inflates the chamber, pushing the upper tray 25 upwards relative to the lower tray 24. As a result the upper structure crush can 22 is moved out of the upper tray 25 and pushed towards the occupants upper legs and / or pelvis. This provides a rigid reaction surface for the occupants pelvis to couple the pelvis to the seat in a considerably more efficient way than conventional anti submarining devices provide.

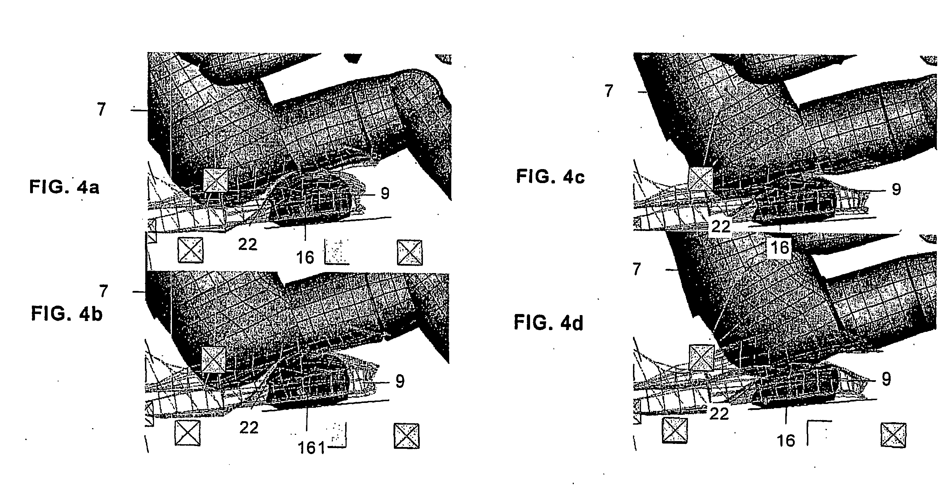

We will now explain the working of the first embodiment of the invention following Fig. 4.

Fig 4a shows the fully expanded form of this embodiment, 15 ms after the collision, in which the volumetric chamber has inflated sufficiently so as to invert the upper tray 25 of the chamber 16 itself. In this figure, the upper structure crush can 25 is deployed to its design condition. Figs 4b, 4c and 4d show the progressive crushing of this can 25 in a sequence of images at a 15 ms interval, due to interaction with the moving occupant 7.

The swaged design of the can 25 as shown in fig 2 allows controlled crush of the can 25 and of the energy in the pelvis. This allows the forces on the occupants pelvis and lower spine to be managed within biomechanicaly acceptable levels and in a efficient manner. In doing this the invention limits forward movement of the pelvis to minimise interaction of the occupants knees and lower legs with the vehicle's instrument panel structure. Depending on design, the crush can 25 may or may not fully crush to absorb the necessary energy. Similarly, to increase efficiency, a degree of compliance and crush of the volumetric chamber 16 may be allowed, either by plastic deformation of the tray structures and / or by venting the chamber. Such venting may be by active or passive means.

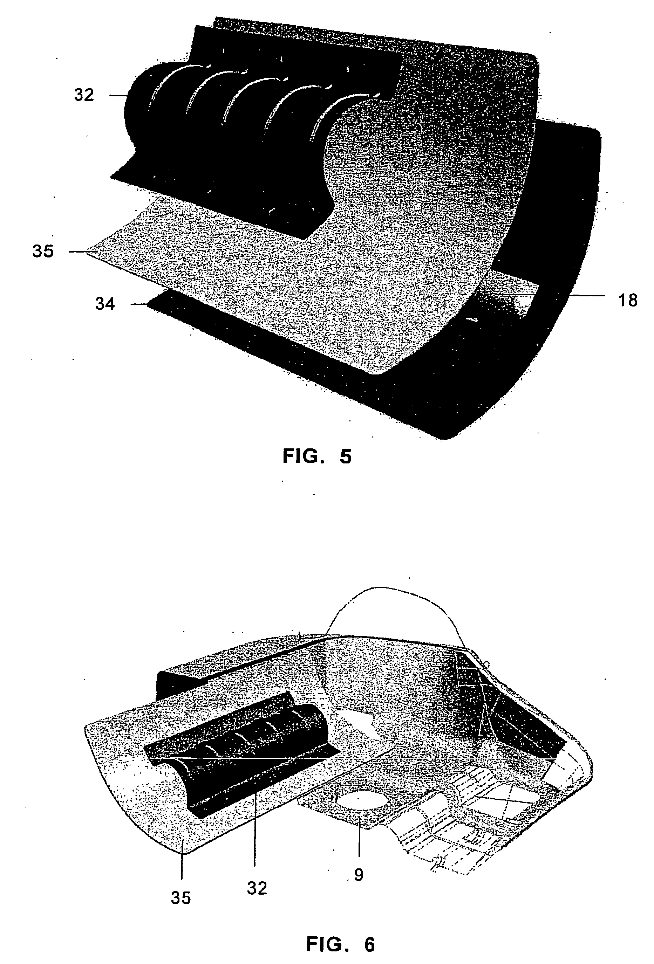

A second embodiment of the invention will now be described following Figures 5 and 6.

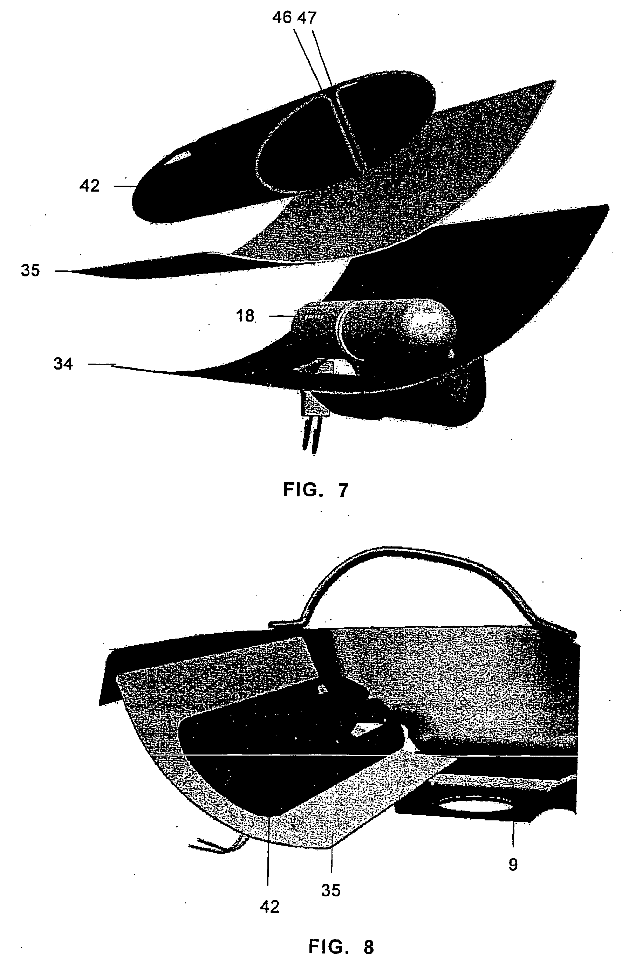

In this embodiment, the upper structure can 32 is attached to the top of a volumetric chamber formed by two curved flat panels 35, 34 welded all round. The chamber is inflated in a collision and the can 32 is pushed towards the occupant to react with the pelvis. As seen in Fig. 7 the device is supported by the frame structure 9 of the seat. As with the first embodiment, the crush can 32 is deformed to absorb energy from the interacting pelvis and may or may not be supplemented by deformation or venting of the volumetric chamber itself.

A third embodiment of the invention will now be described following Figures 7 and 8.

The volumetric chamber is of similar design to that in the second embodiment of the invention, but the crush mechanism of the can 42 is different. In this, the central vertical walls 46, 47 of the crush can 42 may be tuned so as to buckle at a predetermined and designed force. This deformation may be balanced with the deformation of the curved surface of the can itself. The can may be designed to deform in a controlled manner, by locally relieving its stiffness in bending, by one or more slots or holes or may be stiffened by swages. Any combination of slots, holes and or swages may employed as appropriate either in the central vertical walls of the can and / or in the main curved surfaces of the can.

Although the present invention has been fully described in connection with preferred embodiments, it is evident that modifications may be introduced within the scope thereof, not considering this as limited by these embodiments, but by the contents of the following claims.

## Claims

1. A vehicle seat (1) comprising inside the squab (2) an inflatable chamber (16) which is supported by the frame (9) of the squab (2), the inflatable chamber (16) comprising inflation means (18) for inflating said chamber (16) in the event of a collision, the vehicle seat (1) also comprising inside the squab (2) a deformable upper structure (12, 22, 32, 42) placed over the inflatable chamber (16) **characterized in that** the inflatable chamber (16) is a sealed chamber comprising an upper plate (15, 25, 35) and a lower plate (14, 24, 34), both the upper plate (15, 25, 35) and the lower plate (14, 24, 34) being rigid or semi-rigid structures such that, in the event of a collision, the deployment of the inflatable chamber (16) allows the control of the direction of the displacement of the upper deformable structure (12, 22, 32, 42) by the geometry and construction of the upper plate (15, 25, 35), the upper structure (12, 22, 32, 42) being moved out of the upper plate (15, 25, 35) and pushed towards the occupant's upper legs and/or pelvis, providing a rigid reaction surface for the occupant's pelvis to couple the pelvis to the seat (1), allowing a restraining force (19) to be applied to the occupant before significant movement of the occupant relative to the seat (1) has occurred.

2. A vehicle seat (1) according to claim 1, wherein said deformable upper structure (12, 22, 32, 42) consists of a deformable laminar element (22, 32, 42) having a shape that facilitates the control of its deformation during the collision.

3. A vehicle seat (1) according to claim 2, wherein said deformable laminar element is in the form of a swaged can (22).

4. A vehicle seat (1) according to claim 2, wherein said deformable laminar element is in the form of a tile (32).

5. A vehicle seat (1) according to claim 2, wherein said deformable laminar element is in the form of a swaged can with central vertical walls (42).

6. A vehicle seat (1) according to claim 1, wherein the upper and lower plates of the chamber (16) are in the form of trays (25, 24)

7. A vehicle seat (1) according to claim 1, wherein the upper and lower plates of the chamber (16) are in the form of flat curved panels (35, 34).

8. A vehicle seat (1) according to claim 1, wherein the chamber (16) is arranged for absorbing energy during the collision.

9. A vehicle seat (1) according to claim 1, wherein the chamber (16) comprises venting holes.

10. A vehicle seat (1) according to claim 1, wherein the deformable upper structure (12, 22, 32, 42) is rigidly attached to the chamber (16).

11. A vehicle seat (1) according to claim 1, wherein the chamber (16) is secured all round by seam weld (29).

## Patentansprüche

1. Fahrzeugsitz (1), der innerhalb des Polsters (2) eine aufblasbare Kammer (16) aufweist, die durch den Rahmen (9) des Polsters (2) abgestützt ist, wobei die aufblasbare Kammer (16) eine Aufblaseinrichtung (18) zum Aufblasen der Kammer (16) im Fall einer Kollision aufweist, wobei der Fahrzeugsitz (1) auch innerhalb des Polsters (2) eine verformbare obere Struktur (12, 22, 32, 42) aufweist**,** die über der aufblasbaren Kammer (16) plaziert ist, **dadurch gekennzeichnet, daß** die aufblasbare Kammer (16) eine abgedichtete Kammer mit einer oberen Platte (15, 25, 35) und einer unteren Platte (14, 24, 34) ist, wobei sowohl die obere Platte (15, 25, 35) als auch die untere Platte (14, 24, 34) starre oder halbstarre Strukturen sind, so daß im Fall einer Kollision die Entfaltung der aufblasbaren Kammer (16) die Steuerung der Verschiebungsrichtung der oberen verformbaren Struktur (12, 22, 32, 42) durch die Geometrie und den Aufbau der oberen Platte (15, 25, 35) ermöglicht, wobei die obere Struktur (12, 22, 32, 42) aus der oberen Platte (15, 25, 35) bewegt und zu den Oberschenkeln und/oder zum Becken des Insassen gedrückt wird, was für eine starre Resktionsfläche für das Becken des Insassen sorgt, um das Becken mit dem Spitz (1) zu koppeln, wodurch eine Rückhaltekraft (19) auf den Insassen ausgeübt werden kann, bevor eine erhebliche Bewegung des Insassen relativ zum Sitz (1) aufgetreten ist.

2. Fahrzeugsitz (1) nach Anspruch 1, wobei die verformbare obere Struktur (12, 22, 32, 42) aus einem verformbaren Laminarelement (22, 32, 42) mit einer Form besteht, die die Steuerung ihrer Verformung während der Kollision erleichtert.

3. Fahrzeugsitz (1) nach Anspruch 2, wobei das verformbare Laminarelement die Form eines gestauchten Kanisters (22) hat.

4. Fahrzeugsitz (1) nach Anspruch 2, wobei das verformbare Laminarelement die Form eines Ziegels (32) hat.

5. Fahrzeugsitz (1) nach Anspruch 2, wobei das verformbare Laminarelement die Form eines gestauchten Kanisters mit mittleren senkrechten Wänden (42) hat.

6. Fahrzeugsitz (1) nach Anspruch 1, wobei die obere und untere Platte der Kammer (16) die Form von Schalen (25, 24) haben.

7. Fahrzeugsitz (1) nach Anspruch 1, wobei die obere und untere Platte der Kammer (16) die Form von flachen gekrümmten Blechen (35, 34) haben.

8. Fahrzeugsitz (1) nach Anspruch 1, wobei die Kammer (16) zum Absorbieren von Energie während der Kollision angeordnet ist.

9. Fahrzeugsitz (1) nach Anspruch 1, wobei die Kammer (16) Lüftungelöcher aufweist.

10. Fahrzeugsitz (1) nach Anspruch 1, wobei die verformbare obere Struktur (12, 22, 32, 42) an der Kammer (16) starr angebracht ist.

11. Fahrzeugsitz (1) nach Anspruch 1, wobei die Kammer (16) rundherum durch eine Schweißnaht (29) befestigt ist.

## Revendications

1. Siège de véhicule (1) comprenant, à l'intérieur du rembourrage (2), une chambre gonflable (16) qui est supportée par le cadre (9) du rembourrage (2), la chambre gonflable (16) comprenant des moyens de gonflage (18) pour gonfler ladite chambre (16) dans le cas d'une collision, le siège de véhicule (1) comprenant, également à l'intérieur du rembourrage (2), une structure supérieure déformable (12, 22, 32, 42) placée par-dessus la chambre gonflable (16), **caractérisé en ce que** la chambre gonflable (16) est une chambre fermée hermétiquement comprenant une plaque supérieure (15, 25, 35) et une plaque inférieure (14, 24, 34), la planque supérieure (15, 25, 35) et la plaque inférieure (14, 24, 34) étant toutes les deux des structures rigides ou semi-rigides de sorte que, dans le cas d'une collision, le déploiement de la chambre gonflable (16) permette le contrôle de la direction du déplacement de la structure déformable supérieure (12, 22, 32, 42) par l'intermédiaire de la géométrie et la construction de la plaque supérieure (15, 25, 35), la structure supérieure (12, 22, 32, 42) étant déplacée hors de la plaque supérieure (15, 25, 35) et poussée vers les jambes supérieures et/ou le pelvis de l'occupant, fournissant une surface de réaction rigide pour le pelvis de occupant pour coupler le pelvis au siège (1), permettant à une force de retenue (19) d'être appliquée sur l'occupant avant que le mouvement important de l'occupant par rapport au siège (1) ne se produise.

2. Siège de véhicule (1) selon la revendication 1, dans lequel ladite structure supérieure déformable (12, 22, 32, 42) est constituée d'un élément laminaire déformable (22, 32, 42) possédant une forme qui facilite le contrôle de sa déformation au cours de la collision.

3. Siège de véhicule (1) selon la revendication 2, dans lequel ledit élément laminaire déformable présente la forme d'une boîte métallique estampée (22).

4. Siège de véhicule (1) selon la revendication 2, dans lequel ledit élément laminaire déformable présente la forme d'une dalle (32).

5. Siège de véhicule (1) selon la revendication 2, dans lequel ledit élément laminaire déformable présente la forme d'une boîte métallique estampée avec des parois verticales centrales (42).

6. Siège de véhicule (1) selon la revendication 1, dans lequel les plaques supérieure et inférieure de la chambre (16) présentent la forme de plateaux (25, 24).

7. Siège de véhicule (1) selon la revendication 1, dans lequel les plaques supérieure et inférieure de la chambre (16) présentent la forme de panneaux courbés plats (35, 34).

8. Siège de véhicule (1) selon la revendication 1, dans lequel la chambre (16) est agencée pour absorber de l'énergie au cours de la collusion.

9. Siège de véhicule (1) selon la revendication 1, dans lequel la chambre (16) comprend des trous de ventilation.

10. Siège de véhicule (1) salon la revendication 1, dans lequel la structure supérieure déformable (12, 22, 32, 42) est fixée à la chambre (16) de façon rigide.

11. Siège de véhicule (1) selon la revendication 1, dans lequel la chambre (16) est fixée tout autour par une soudure continue (29).
